(19) Europäisches Patentamt
European Patent Office
Office européen des brevets

(11) Veröffentlichungsnummer: **0 001 053**
**A1**

# (12) EUROPÄISCHE PATENTANMELDUNG

(21) Anmeldenummer: 78100636.6

(22) Anmeldetag: 08.08.78

(51) Int. Cl.[2]: C 07 F 9/24
C 07 F 9/44, A 01 N 9/36

(30) Priorität: 26.08.77 DE 2738508

(43) Veröffentlichungstag der Anmeldung: 21.03.79 Patentblatt 79/6

(84) Benannte Vertragsstaaten: BE CH DE FR GB NL

(71) Anmelder: Bayer Aktiengesellschaft
Zentralbereich Patente, Marken und Lizenzen Bayerwerk
D-5090 Leverkusen 1(DE)

(72) Erfinder: Hoffmann, Hellmut
Tersteegenweg 17
D-5600 Wuppertal 1(DE)

(72) Erfinder: Arlt, Dieter
Rybniker Strasse 1
D-5000 Köln(DE)

(72) Erfinder: Hammann, Ingeborg
Belfortstrasse 9
D-5000 Köln 1(DE)

(72) Erfinder: Homeyer, Bernhard
Obere Strasse 28
D-5090 Leverkusen 3(DE)

(72) Erfinder: Stendel, Wilhelm
In den Birken 55
D-5600 Wuppertal-1(DE)

## (54) N-Acetyl-O-(1-fluor-2-chloräthyl)-thionophosphor-(phosphon)-säureesteramide, Verfahren zu ihrer Herstellung und ihre Verwendung als Insektizide Akarizide und Nematizide.

(57) Die Erfindung betrifft neue N-Acetyl-O- (1-fluor-2-chloräthyl)- thionophosphor (phosphon)- säureesteramide der Formel

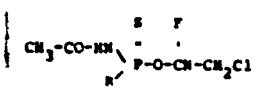

in welcher
R für Alkyl oder Alkoxy steht.

Die neuen Verbindungen zeichnen sich durch starke insektizide, akarizide und nematizide Eigenschaften aus.

EP 0 001 053 A1

BAYER AKTIENGESELLSCHAFT 5090 Leverkusen, Bayerwerk
Zentralbereich Rt/Th
Patente, Marken und Lizenzen Typ I a

N-Acetyl-O-(1-fluor-2-chloräthyl)-thionophosphor-(phosphon)-säureesteramide, Verfahren zu ihrer Herstellung und ihre Verwendung als Insektizide Akarizide und Nematizide

Die vorliegende Erfindung betrifft neue N-Acetyl-O-(1-fluor-2-chloräthyl)-thionophosphor(phosphon)-säureesteramide, Verfahren zu ihrer Herstellung sowie ihre Verwendung als Insektizide, Akarizide und Nematizide.

Es ist bereits bekannt, daß chlorsubstituierte Alkylphosphonsäureester, z.B. O,O-Dimethyl-2,2,2-trichlor-1-hydroxy-äthylphosphonsäureester sich durch eine insektizide und akarizide Wirksamkeit auszeichnen (vergleiche USA-Patentschrift 2 701 225).

Es wurden nun die neuen N-Acetyl-O-(1-fluor-2-chloräthyl)-thionophosphor(phosphon)-säureesteramide der Formel (I)

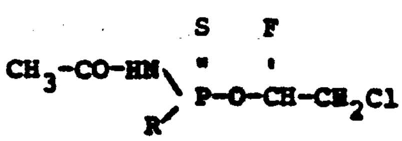

(I)

in welcher

R für Alkyl oder Alkoxy steht,
gefunden.

Die neuen Verbindungen zeichnen sich durch starke insektizide, akarizide und nematizide Eigenschaften aus.

Weiterhin wurde gefunden, daß die N-Acetyl-O-(1-fluor-2-chloräthyl)-thionophosphor(phosphon)-säureesteramide der Formel (I) erhalten werden, wenn man O-(1-Fluor-2-chloräthyl)-thionophosphor(phosphon)-säureesteramid der Formel II

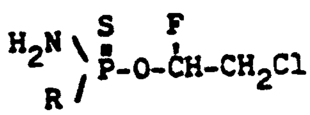 (II)

in welcher
R die oben angegebene Bedeutung hat,

mit Essigsäureanhydrid gegebenenfalls in Gegenwart eines Lösungs- oder Verdünnungsmittels und gegebenenfalls in Gegenwart eines sauren Katalysators umsetzt.

Überraschenderweise zeigen die erfindungsgemäßen N-Acetyl-O-(1-fluor-2-chloräthyl)-thionophosphor(phosphon)-säureesteramide eine bessere insektizide, akarizide und nematizide Wirkung als die entsprechenden chlorsubstituierten Alkylphosphonsäureester analoger Konstitution und gleicher Wirkungsrichtung. Die Produkte gemäß vorliegender Erfindung

stellen somit eine echte Bereichung der Technik dar.

Verwendet man beispielsweise O-iso-Propyl-O-(2-chlor-1-fluoräthyl)-thionophosphorsäurediesteramid und Essigsäureanhydrid als Ausgangsmaterialien, so kann der Reaktionsverlauf durch das folgende Formelschema wiedergegeben werden:

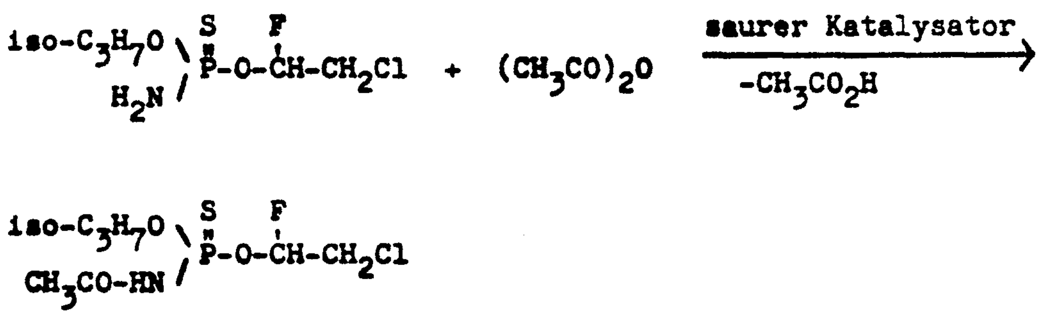


Die zu verwendenden Ausgangsstoffe sind durch die Formel (II) allgemein definiert. Vorzugsweise steht darin jedoch

R für geradkettiges oder verzweigtes Alkyl mit 1 bis 6, insbesondere 1 bis 3, Kohlenstoffatomen oder für geradkettiges oder verzweigtes Alkoxy mit 1 bis 6, insbesondere 1 bis 3, Kohlenstoffatomen.

Die als Ausgangsstoffe zu verwendenden O-(2-Chlor-1-fluoräthyl)-thionophosphor(phosphon)-säureesteramide der Formel (II) sind Gegenstand einer älteren nicht vorveröffentlichten Anmeldung P 26 29 016.4 und können hergestellt werden, indem man O-(2-Chlor-1-fluoräthyl)-thionophosphor(phosphon)-säureesterhalogenide der Formel III

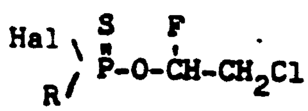 (III)

in welcher

Hal für Halogen, vorzugsweise Chlor, und

R die oben angegebene Bedeutung hat,

mit Ammoniak gegebenenfalls in Gegenwart eines Lösungsmittels umsetzt.

Als Beispiele für Ausgangsstoffe der Formel II seien im einzelnen genannt:
Methan-, Äthan-, n- oder iso-Propan-O-(2-chlor-1-fluoräthyl)-thionophosphonsäureesteramid, ferner
O-Methyl-, O-Äthyl, O-n- oder-iso-Propyl-O-(2-chlor-1-fluoräthyl)-thionophosphorsäurediesteramid.

Die als Ausgangsstoffe zur Herstellung der Verbindungen der Formel II dienenden O-(2-chlor-1-fluoräthyl)thionophosphorsäurediesterhalogenide können in an sich bekannter Weise durch Umsetzung des O-(1-Fluor-2-chloräthyl)-thionophosphorsäureesterdichlorids mit den entsprechenden Alkoholen hergestellt werden.

Die hierzu als Ausgangsstoffe zu verwendenden O-(1-Fluor-2-chlor-äthyl)-thionophosphorsäureesterdihalogenide sowie die O-(1-Fluor-2-chlor-äthyl)-thionophosphonsäureestermonohalogenide können aus den entsprechenden P=O Verbindungen mit Alkan- bzw. Aryldithiophosphonsäureanhydriden gegebenenfalls im Gemisch mit Phosphorsulfochlorid und gegebenenfalls in Gegenwart eines Lösungsmittels nach folgendem Formelschema gewonnen werden:

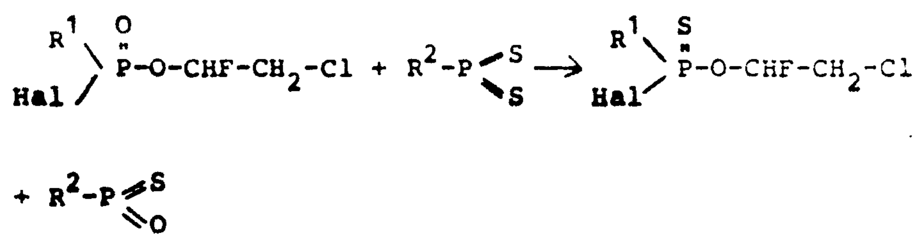

worin

Hal die oben angegebene Bedeutung hat,

$R^1$ für Hal oder Alkyl und

$R^2$ für Alkyl oder Aryl stehen.

Als Beispiele für die O-(1-Fluor-2-chlor-äthyl)-thionophosphorsäureesterdihalogenide bzw. -thionophosphonsäureestermonohalogenide seien im einzelnen genannt:
Methan-, Äthan-, n-Propan- und iso-Propan-O-(2-chlor-1-fluoräthyl)-thionophosphonsäureesterchlorid und O-(2-Chlor-1-fluoräthyl)-thionophosphorsäureesterdichlorid.

Die hierzu als Ausgangsstoffe zu verwendenden O-(1-Fluor-2-chlor-äthyl)-phosphonsäureesterhalogenide, die O-(1-Fluor-2-chlor-äthyl)-phosphonsäureesterdihalogenide und O-Alkyl-O-(1-fluor-2-chlor-äthyl)-phosphorsäurediesterhalogenide sind nach einem nicht zum Stand der Technik gehörenden Verfahren herstellbar, indem man einen Phosphor(phosphon)säureester und Vinylfluorid unter gleichzeitiger Verwendung von Chlorierungsmitteln, wie Chlor, bei Temperaturen zwischen -50°C und +120°C gegebenenfalls in Gegenwart eines Friedel-Crafts-Katalysators und gegebenenfalls in Gegenwart eines Lösungsmittels zu den entsprechenden O-(1-Fluor-2-chlor-äthyl)-phosphor(phosphon)-säureesterhalogeniden nach folgenden Formelschema umsetzt:

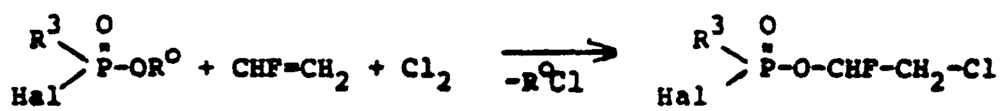


worin

Hal die oben angegebene Bedeutung hat und

$R^3$ für Alkyl, Alkoxy oder Hal steht und

$R^o$ für Alkyl steht.

Als Beispiele für die O-(1-Fluor-2-chlor-äthyl)-phosphonsäureesterhalogenide, O-(1-Fluor-2-chlor-äthyl)-phosphorsäureesterhalogenide und O-Alkyl-O-(1-fluor-2-chlor-äthyl)-phosphorsäurediesterhalogenide seien im einzelnen genannt: Methan-, Äthan-, n-Propan- und iso-Propan-O-(2-chlor-1-fluor-

äthyl)-phosphonsäureesterchlorid, O-(2-Chlor-1-fluor-äthyl)-phosphorsäureesterdichlorid, ferner O-Methyl-, O-Äthyl-, O-n-Propyl- bzw. O-iso-Propyl-O-(2-chlor-1-fluor-äthyl)-phosphorsäurediesterchlorid.

Das weiterhin als Ausgangsstoff zur Herstellung der erfindungsgemäßen Verbindungen der Formel (I) zu verwendende Essigsäureanhydrid ist bekannt.

Das Verfahren zur Herstellung der erfindungsgemäßen Verbindungen wird bevorzugt unter Mitverwendung geeigneter Lösungs- oder Verdünnungsmittel durchgeführt. Als solche kommen praktisch alle inerten organischen Solventien infrage. Hierzu gehören insbesondere aliphatische und aromatische, gegebenenfalls chlorierte Kohlenwasserstoffe, wie Benzol, Toluol, Xylol, Benzin, Methylenchlorid, Chloroform, Tetrachlorkohlenstoff, Chlorbenzol, oder Äther, z.B. Diäthyl- und Dibutyläther, Dioxan, ferner Ketone, beispielsweise Aceton, Methyläthyl-, Methylisopropyl- und Methylisobutylketon, außerdem Nitrile, wie Aceto- und Propionitril. Oder das Ausgangsprodukt Essigsäureanhydrid wird im Überschuß eingesetzt und dient so gleichzeitig als Reaktionskomponente und Lösungsmittel. Als Katalysator setzt man vorzugsweise einige Tropfen Schwefelsäure zu.

Die Reaktionstemperatur kann innerhalb eines größeren Be[illegible] variiert werden. Im allgemeinen arbeitet man zwischen 30 und 100°C, vorzugsweise zwischen 45 bis 75°C.

Die Umsetzung läßt man im allgemeinen bei Normaldruck ablaufen.

Zur Durchführung gibt man beide Reaktionskomponenten in ein Reaktionsgefäß, wobei man vorzugsweise das Essigsäureanhydrid im Überschuß einsetzt und läßt nach Zugabe eines sauren Katalysators, z.B. Schwefelsäure, wobei eine exotherme Reaktion auftritt, einige Stunden nachreagieren. Danach nimmt man die Reaktionslösung in einem organischen Lösungsmittel auf und arbeitet die organische Phase wie üblich durch Waschen, Trocknen und Abdestillieren des Lösungsmittels auf.

Die neuen Verbindungen fallen in Form von Ölen an, die sich zum Teil nicht unzersetzt destillieren lassen, jedoch durch sogenanntes "Andestillieren", d.h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z. B. Oniscus asellus, Armadillidium vulgare, Porcellio scaber.
Aus der Ordnung der Diplopoda z. B. Blaniulus guttulatus.
Aus der Ordnung der Chilopoda z. B. Geophilus carpophagus, Scutigera spec.
Aus der Ordnung der Symphyla z. B. Scutigerella immaculata.
Aus der Ordnung der Thysanura z. B. Lepisma saccharina.
Aus der Ordnung der Collembola z. B. Onychiurus armatus.
Aus der Ordnung der Orthoptera z. B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z. B. Forficula auricularia.
Aus der Ordnung der Isoptera z. B. Reticulitermes spp..
Aus der Ordnung der Anoplura z. B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae,

Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp..
Aus der Ordnung der Lepidoptera z. B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.
Aus der Ordnung der Coleoptera z. B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z. B. Diprion spp., Hoplocampa spp., Lasius spp., Monomorium pharaonis, Vespa spp.
Aus der Ordnung der Diptera z.B. Aëdes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp.,

Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die Wirkstoffe können in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä. sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe: natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehle, Kokos-

nußschalen, Maiskolben und Tabakstengel; als Emulgier- und/oder schaumerzeugende Mittel: nichtionogene und anionische Emulgatoren, wie Polyoxyäthylen-Fettsäure-Ester, Polyoxyäthylen-Fettalkohol-Äther, z.B. Alkylaryl-polyglykol-äther, Alkylsulfonate, Alkylsulfate, Arylsulfonate sowie Eiweißhydrolysate; als Dispergiermittel: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Anwendung der erfindungsgemäßen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,01 und 10 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Auf dem veterinärmedizinischen Gebiet zeichnen sich die Wirkstoffe durch gute Wirksamkeit gegen Ektoparasiten aus.

Die Anwendung der erfindungsgemäßen Wirkstoffe geschieht im Veterinärsektor in bekannter Weise, wie durch orale Anwendung in Form von beispielsweise Tabletten, Kapseln, Tränken, Granulaten, durch dermale Anwendung in Form beispielsweise des Tauchens (Dippen), Sprühens (Sprayen), Aufgießens (pour-on and spot-on) und des Einpuderns sowie durch parenterale Anwendung in Form beispielsweise der Injektion.

## Beispiel A

Myzus-Test (Kontakt-Wirkung)

| | | |
|---|---|---|
| Lösungsmittel: | 3 Gewichtsteile | Aceton |
| Emulgator : | 1 Gewichtsteil | Alkylarylpolyglykoläther |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Mit der Wirkstoffzubereitung werden Kohlpflanzen (Brassica oleracea), welche stark von der Pfirsichblattlaus (Myzus persicae) befallen sind, tropfnaß besprüht.

Nach den angegebenen Zeiten wird die Abtötung in % bestimmt. Dabei bedeutet 100 %, daß alle Blattläuse abgetötet wurden; 0 % bedeutet, daß keine Blattläuse abgetötet wurden.

Bei diesem Test zeigen z.B. die Verbindungen der folgenden Beispiele gute Wirksamkeit: 1

Beispiel B

Tetranychus-Test (resistent)

| | | |
|---|---|---|
| Lösungsmittel: | 3 Gewichtsteile | Aceton |
| Emulgator: | 1 Gewichtsteil | Alkylarylpolyglykoläther |

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Mit der Wirkstoffzubereitung werden Bohnenpflanzen (Phaseolus vulgaris), die stark von allen Entwicklungsstadien der gemeinen Spinnmilbe oder Bohnenspinnmilbe (Tetranychus urticae) befallen sind, tropfnaß besprüht.

Nach den angegebenen Zeiten wird die Abtötung in % bestimmt. Dabei bedeutet 100 %, daß alle Spinnmilben abgetötet wurden; 0 % bedeutet, daß keine Spinnmilben abgetötet wurden.

Bei diesem Test zeigen z.B. die folgenden Verbindungen gute Wirksamkeit: 2

Beispiel C

Grenzkonzentrations-Test

Testnematode: Meloidogyne incognita
Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27°C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Bei diesem Test zeigen z.B. die folgenden Verbindungen gute Wirksamkeit: 1



BAD ORIGINAL

Beispiel D

Test mit parasitierenden Fliegenlarven

Emulgator: 80 Gewichtsteile Nonylphenolpolyglykoläther

Zur Herstellung einer zweckmäßigen Wirkstoffzubereitung vermischt man 30 Gewichtsteile der betreffenden aktiven Substanz mit der angegebenen Menge Lösungsmittel, das die angegebene Menge Emulgator enthält und verdünnt das so erhaltene Konzentrat mit Wasser auf die gewünschte Konzentration.

Etwa 20 Fliegenlarven (Lucilia cuprina) werden in ein Teströhrchen gebracht, welches ca. 2 $cm^3$ Pferdemuskulatur enthält. Auf dieses Pferdefleisch werden 0,5 ml der Wirkstoffzubereitung gebracht. Nach 24 Stunden wird der Abtötungsgrad in % bestimmt. Dabei bedeuten 100 %, daß alle, und 0 %, daß keine Larven abgetötet worden sind.

Bei diesem Test zeigen z.B. die folgenden Verbindungen gute Wirksamkeit: 2

BAD ORIGINAL

<u>Herstellungsbeispiele</u>

<u>Beispiel 1:</u>
a)

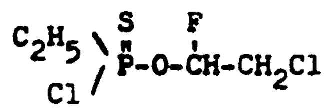

Eine Anschlämmung von 15o ml Toluol, 96 g (o,4 Mol) Anisyldithiophosphorsäureanhydrid und 84 g (o,4 Mol) O-(2-Chlor-1-fluor-äthyl)-äthan-phosphonsäureesterchlorid wird 2 Stunden auf 115-12o°C erhitzt, abgekühlt, in 1 l Ligroin gegossen, über Kieselgur filtriert, das Lösungsmittel abgedampft und der Rückstand destilliert. Man erhält 33 g (73 % der Theorie) O-(2-Chlor-1-fluor-äthyl)-thionoäthanphosphonsäureesterchlorid mit dem Siedepunkt von 82°C/ 2 mm Hg.

b)

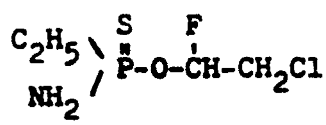

Auf eine Lösung aus 67,5 g (o,3 Mol) des unter a) hergestellten O-(2-Chlor-1-fluor-äthyl)-thionoäthanphosphonsäureesterchlorids in 3oo ml Acetonitril wird unter Rühren bei 15-2o°C Ammoniak geleitet. Das Ende der Reaktion erkennt man daran, daß das Reaktionsgemisch auch nach Abstellen des Ammoniak-Stromes alkalisch bleibt. Man nimmt mit 5oo ml Toluol auf und wäscht die organische Phase mehrmals mit Wasser, trocknet sie über Natriumsulfat und filtriert. Das Toluol wird im Vakuum abdestilliert und der Rückstand an der Quecksilberpumpe andestilliert. Man erhält 51 g (83 % der Theorie) O-(2-Chlor-1-fluor-äthyl)-thionoäthanphosphonsäureesteramid mit einem Brechungsindex von $n_D^{24}$: 1,5111.



BAD ORIGINAL

c)

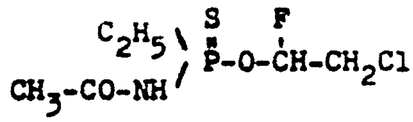

Zu einer Mischung aus 21 g (o,1 Mol) O-(2-Chlor-1-fluor-äthyl)-thionoäthanphosphonsäureesteramid und 11 g Essigsäureanhydrid gibt man 2 Tropfen reine, konzentrierte Schwefelsäure, wobei die Temperatur auf 55°C ansteigt. Man läßt die Reaktionsmischung über Nacht stehen, nimmt in Toluol auf und wäscht die organische Phase mit einer Bicarbonat-Lösung neutral. Nach dem Trocknen der organischen Phase zieht man das Toluol im Vakuum ab und destilliert den Rückstand an der Quecksilberpumpe an. Man erhält 18 g (73 % der Theorie) O-(2-Chlor-1-fluor-äthyl)-N-acetyl-thionoäthanphosphonsäureesteramid mit dem Brechungsindex von $n_D^{24}$: 1,5o8o.

Beispiel 2:

a)

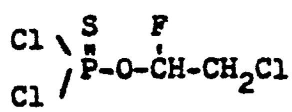

Ein Gemisch aus 17 g Phosphorsulfochlorid, 12 g (o,o5 Mol) O-(2-Chlor-1-fluor-äthyl)-phosphorsäureesterdichlorid und 3 g Methandithiophosphonsäureanhydrid wird 15 Stunden auf eine Temperatur von 15o°C (außen) erhitzt, abgekühlt, mit 2oo ml Ligroin verdünnt, über Kieselgur filtriert, das Lösungsmittel im Vakuum abgedampft und der verbleibende Rückstand destilliert. Man erhält 7 g (61 % der Theorie) laut Gaschromatogramm 9o%iges O-(2-Chlor-1-fluor-äthyl)-thionophosphorsäureesterdichlorid mit dem Siedepunkt von 65°C/3 mm Hg.

b) 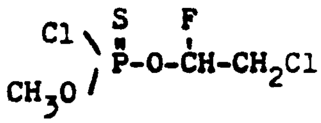

Eine Lösung von 47 g (o,2 Mol) O-(1-Fluor-2-chlor-äthyl)-thionophosphorsäureesterdichlorid in 3oo ml Toluol versetzt man unter Kühlung mit o,2 Mol einer Natriummethylatlösung, rührt das Gemisch 3o Minuten bei einer Temperatur bis 1o°C nach, wäscht es 2 mal mit Wasser, trocknet die organische Schicht über Natriumsulfat, dampft das Toluol unter vermindertem Druck ab und destilliert den Rückstand. Man erhält in 81%iger Ausbeute das O-Methyl-O-(1-fluor-2-chloräthyl)-thionophosphorsäurediesterchlorid mit dem Siedepunkt von 38-42°C/o,o1 Torr.

c) 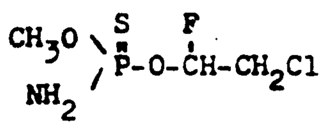

In eine Lösung von 23 g (o,1 Mol) O-Methyl-O-(1-fluor-2-chlor-äthyl)-thionophosphorsäurediesterchlorid in 2oo ml Acetonitril leitet man bei +2o°C bis zum Ende der Reaktion Ammoniak. Das Reaktionsgemisch wird in Wasser gegossen, in Toluol aufgenommen, die organische Phase mit Wasser gewaschen und über Natriumsulfat getrocknet, das Toluol abgedampft und der Rückstand unter stark vermindertem Druck abdestilliert. Man erhält 16 g (77 % der Theorie) O-Methyl-O-(1-fluor-2-chloräthyl)-thionophosphorsäurediesteramid mit dem Brechungsindex $n_D^{23}$:1,493o.

d) 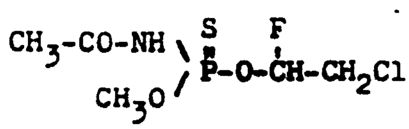



BAD ORIGINAL

In eine Lösung aus 2o ml Toluol, 21 g (o,1 Mol) O-Methyl-O-(1-fluor-2-chloräthyl)-thionophosphorsäurediesteramid und 11 g Essigsäureanhydrid gibt man unter Rühren o,5 ml reine, konzentrierte Schwefelsäure, wobei die Temperatur auf 55°C ansteigt. Man läßt die Reaktionsmischung über Nacht stehen, nimmt in Toluol auf und wäscht die organische Phase mit einer Bicarbonat-Lösung neutral. Nach dem Trocknen über Natriumsulfat wird filtriert und das Toluol im Vakuum abgezogen, man destilliert den Rückstand an der Quecksilberpumpe an. Man erhält 16 g (64% der Theorie) O-Methyl-O-(2-chlor-1-fluoräthyl)-N-acetyl-thionophosphorsäurediesteramid mit dem Brechungsindex von $n_D^{24}$:1,4959.

Patentansprüche

1. N-Acetyl-O-(1-fluor-2-chloräthyl)-thionophosphor (phosphon)-säureesteramide der Formel I

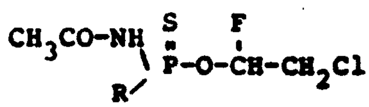

I

in welcher

R für Alkyl oder Alkoxy steht.

2. Verfahren zur Herstellung der N-Acetyl-O-(1-fluor-2-chloräthyl)-thionophosphor(phosphon)-säureesteramide der Formel I gemäß Anspruch 1, dadurch gekennzeichnet, daß man O-(1-Fluor-2-chloräthyl)-thionophosphor(phosphon)-säureesteramid der Formel II

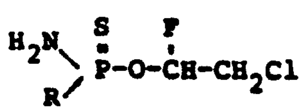

II

in welcher

R die oben angegebene Bedeutung hat,

mit Essigsäureanhydrid gegebenenfalls in Gegenwart eines Lösungs- oder Verdünnungsmittels und gegebenenfalls in Gegenwart eines sauren Katalysators umsetzt.

3. Insektizide, akarizide oder nematizide Mittel gekennzeichnet durch einen Gehalt an mindestens einem N-Acetyl-O-(1-fluor-2— chloräthyl)-thionophosphor(phosphon)-säureesteramid der Formel I gemäß Anspruch 1.

4. Verwendung von N-Acetyl-O-(1-fluor-2— chloräthyl)-thionophosphor(phosphon)-säureesteramiden der Formel I gemäß Anspruch 1 zur Bekämpfung von Insekten, Acarinae oder Nematoden.

5. Verfahren zur Bekämpfung von Insekten, Acarinae oder Nematoden, dadurch gekennzeichnet, daß man N-Acetyl-O-(1-fluor-2— chloräthyl)-thionophosphor(phosphon)-säureesteramide der Formel I gemäß Anspruch 1 auf Insekten, Acarinae oder Nematoden und/oder ihren Lebensraum einwirken läßt.

6. Verfahren zur Herstellung insektizider, akarizider oder nematizider Mittel, dadurch gekennzeichnet, daß man N-Acetyl-O-(1-fluor-2— chloräthyl)-thionophosphor(phosphon)-säureesteramide der Formel I gemäß Anspruch 1 mit Streckmitteln und/oder oberflächenaktiven Stoffen vermischt.

0001053

Europäisches Patentamt

# EUROPÄISCHER RECHERCHENBERICHT

Nummer der Anmeldung

EP 78 100 636.6

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| P | DE - A - 2 630 561 (BAYER)<br>* Ansprüche 5 bis 6 *<br>-- | 3,4,5,6 | C 07 F 9-24<br>C 07 F 9-44<br>A 01 N 9-36 |
| D,P | DE - A - 2 629 016 (BAYER)<br>* Ansprüche 3 bis 6 *<br>-- | 3,4,5,6 | |
| A | DE - A - 2 528 096 (BAYER)<br>-- | | |
| A | DE - A - 2 417 143 (BAYER)<br>---- | | |

RECHERCHIERTE SACHGEBIETE (Int. Cl.²)

C 07 F 9-24
C 07 F 9-44
A 01 N 9-36

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 4-12-1978 | KAPTEYN |